# EUROPEAN PATENT APPLICATION

(11) **EP 4 804 499 A1**
(43) Date of publication of application: **09.09.2026**
(21) Application number: 24884371.6
(22) Date of filing: 08.10.2024
(51) Int. Cl.: H04L 67/568

(54) **METHOD FOR REPORTING BUFFER STATUS, APPARATUS, TERMINAL, AND NETWORK DEVICE**

(30) Priority: 03.11.2023 CN 202311459485
(71) Applicant: Datang Mobile Communications Equipment Co., Ltd., Beijing 100085 (CN)
(72) Inventor: CHEN, Li, Beijing 100085 (CN); ZHAO, Yali, Beijing 100085 (CN); BERTRAND, piaier, Beijing 100085 (CN)
(74) Representative: Ipsilon
(86) International application number: PCT/CN2024/123375
(87) International publication number: WO 2025/092367

(57) **Abstract**

The present disclosure provides a method for reporting buffer status, an apparatus, a terminal, and a network device. The method comprises: when a first condition is satisfied, cancelling triggered buffer status reporting and/or cancelling a scheduling request (SR) triggered on the basis of the buffer status reporting, wherein the first condition comprises at least one of the following: a delay status report media access control control unit (DSR MAC CE) comprises the total volume of buffer data of the terminal; the DSR MAC CE comprises the total volume of buffer data of a logical channel or a logical channel group triggering a buffer status report (BSR); and the terminal discards a packet data unit (PDU) set or a PDU.

## Description

### CROSS-REFERENCES TO RELATED APPLICATIONS

The present application claims priority to Chinese patent application No. 2023114594856 filed on November 03, 2023, entitled "Method for Reporting Buffer Status, Apparatus, Terminal, and Network Device", which is hereby incorporated by reference in its entirety.

### FIELD

The present application relates to the field of communications, and in particular, to methods and apparatuses for reporting buffer status, a terminal, and a network device.

### BACKGROUND

Extended reality (XR) and cloud game (CG), as some of the most important 5th generation (5G) media applications, have a requirement for low latency, high throughput, and high reliability, and require a transmission of a large amount of data in a short period. XR is a general term for different types of reality, referring to all environments and human-computer interactions that combine real and virtual elements, generated by computer technology and devices. XR includes representative forms such as augmented reality (AR), mixed reality (MR), and virtual reality (VR).

Traditionally, for an uplink XR service, a latency-based packet data unit (PDU) discarding mechanism, a congestion-based PDU discarding mechanism, and a latency reporting mechanism have been introduced. These mechanisms affect reporting of an uplink buffer status by a terminal. How to address the impact of these mechanisms on the reporting of the uplink buffer status by a terminal needs to be resolved urgently.

### BRIEF SUMMARY

Embodiments of the present application provide methods and apparatuses for reporting buffer status, a terminal, and a network device, to save uplink resources, facilitate accurate resource allocation at a base station side, and improve transmission efficiency.

To solve the above problems, an embodiment of the present application provides a method for reporting buffer status, performed by a terminal, including:
canceling triggered reporting of a buffer status and/or canceling a scheduling request (SR) triggered by reporting of a buffer status in case that a first condition is met,
where the first condition includes at least one of:
   a delay status report (DSR) media access control (MAC) control element (CE) containing all pending data available for transmission of the terminal;
   a DSR MAC CE containing all pending data available for transmission of a logical channel or a logical channel group that triggers a buffer status report (BSR); or
   the terminal discarding a packet data unit (PDU) set or a PDU.

In an embodiment, canceling the triggered reporting of the buffer status includes at least one of:
canceling a BSR for reporting the buffer status; or
canceling a DSR for reporting the buffer status.

In an embodiment, the terminal discarding the PDU set or the PDU includes at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

In an embodiment, in case that the terminal discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

In an embodiment, in case that the terminal discarding all data in the buffer, canceling the triggered reporting of the buffer status includes at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

In an embodiment, in case that the terminal discarding the data that triggered the BSR in the logical channel or the logical channel group, canceling the triggered reporting of the buffer status includes:
canceling a triggered BSR.

In an embodiment, in case that the terminal discarding the data that triggered the DSR in the logical channel or the logical channel group, canceling the triggered reporting of the buffer status includes at least one of:
canceling a triggered DSR; or
sending a DSR MAC CE with a remaining time of 0 and a buffer size of 0 to a network device.

In an embodiment, before canceling the triggered reporting of the buffer status and/or canceling the SR triggered based on the reporting of the buffer status, the method further includes:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the method further includes:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the terminal; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the terminal determines to simultaneously send the triggered DSR and the triggered BSR to the network device, the method further includes:
containing the DSR MAC CE and a BSR MAC CE in an MAC PDU;
   or,
in case that the terminal determines not to simultaneously send the triggered DSR and the triggered BSR to the network device, the method further includes:
   containing the DSR MAC CE in an MAC PDU, and containing a BSR MAC CE in other uplink resources.

An embodiment of the present application further provides a method for reporting buffer status, performed by a network device, including:
determining that a terminal cancels triggered reporting of a buffer status in case of detecting that the terminal does not send data on a first uplink resource.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the method further includes at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, before determining that the terminal cancels the triggered reporting of the buffer status, the method further includes at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

An embodiment of the present application further provides a terminal, including a memory, a transceiver and a processor,
where the memory is used for storing a computer program, the transceiver is used for receiving and sending data under control of the processor, and the processor is used for reading the computer program in the memory and performing following operations:
canceling triggered reporting of a buffer status and/or canceling a scheduling request (SR) triggered by reporting of a buffer status in case that a first condition is met,
where the first condition includes at least one of:
   a delay status report (DSR) media access control (MAC) control element (CE) containing all pending data available for transmission of the terminal;
   a DSR MAC CE containing all pending data available for transmission of a logical channel or a logical channel group that triggers a buffer status report (BSR); or
   the terminal discarding a packet data unit (PDU) set or a PDU.

In an embodiment, canceling the triggered reporting of the buffer status includes at least one of:
canceling a BSR for reporting the buffer status; or
canceling a DSR for reporting the buffer status.

In an embodiment, the terminal discarding the PDU set or the PDU includes at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

In an embodiment, in case that the terminal discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

In an embodiment, in case that the terminal discarding all data in the buffer, canceling the triggered reporting of the buffer status includes at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

In an embodiment, in case that the terminal discarding the data that triggered the BSR in the logical channel or the logical channel group, canceling the triggered reporting of the buffer status includes:
canceling a triggered BSR.

In an embodiment, in case that the terminal discarding the data that triggered the DSR in the logical channel or the logical channel group, canceling the triggered reporting of the buffer status includes at least one of:
canceling a triggered DSR; or
sending a DSR MAC CE with a remaining time of 0 and a buffer size of 0 to a network device.

In an embodiment, before canceling the triggered reporting of the buffer status and/or canceling the SR triggered based on the reporting of the buffer status, the processor is further used for:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the processor is further used for:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the terminal; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the terminal determines to simultaneously send the triggered DSR and the triggered BSR to the network device, the processor is further used for:
containing the DSR MAC CE and a BSR MAC CE in an MAC PDU;
   or,
in case that the terminal determines not to simultaneously send the triggered DSR and the triggered BSR to the network device, the processor is further used for:
   containing the DSR MAC CE in an MAC PDU, and containing a BSR MAC CE in other uplink resources.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing following operations:
determining that a terminal cancels triggered reporting of a buffer status in case of detecting that the terminal does not send data on a first uplink resource.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the processor is further used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, before determining that the terminal cancels the triggered reporting of the buffer status, the processor is further used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

An embodiment of the present application further provides an apparatus for processing information, including:
a first processing unit, used for canceling triggered reporting of a buffer status and/or canceling a scheduling request (SR) triggered by reporting of a buffer status in case that a first condition is met,
where the first condition includes at least one of:
   a delay status report (DSR) media access control (MAC) control element (CE) containing all pending data available for transmission of the apparatus;
   a DSR MAC CE containing all pending data available for transmission of a logical channel or a logical channel group that triggers a buffer status report (BSR); or
   the apparatus discarding a packet data unit (PDU) set or a PDU.

In an embodiment, canceling the triggered reporting of the buffer status includes at least one of:
canceling a BSR for reporting the buffer status; or
canceling a DSR for reporting the buffer status.

In an embodiment, the apparatus discarding the PDU set or the PDU includes at least one of:
the first processing unit discarding a portion of data in a buffer;
the first processing unit discarding all data in a buffer;
the first processing unit discarding data that triggered a BSR in a logical channel or a logical channel group; or
the first processing unit discarding data that triggered a DSR in a logical channel or a logical channel group.

In an embodiment, in case that the apparatus discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the apparatus discards the portion of the data in the buffer;
in case that a DSR MAC CE is organized, updating the DSR MAC CE to contain buffer data volume after the apparatus discards the portion of the data in the buffer; or
in case that a DSR MAC CE is organized, updating the DSR MAC CE to contain data volume of data in a buffer of the apparatus that meets a DSR triggering condition, and remaining time corresponding to the data volume.

In an embodiment, in case that the apparatus discarding all data in the buffer, canceling the triggered reporting of the buffer status includes at least one of:
the apparatus further includes a first sending unit, used for sending a BSR MAC CE with a buffer size of 0 to a network device;
the first processing unit is used for canceling a triggered BSR;
the apparatus further includes a first sending unit, used for sending a DSR MAC CE with a remaining time of 0 and a buffer size of 0 to a network device; or
the first processing unit is used for canceling a triggered DSR.

In an embodiment, in case that the apparatus discarding the data that triggered the BSR in the logical channel or the logical channel group, canceling the triggered reporting of the buffer status includes:
the first processing unit is used for canceling a triggered BSR.

In an embodiment, in case that the apparatus discarding the data that triggered the DSR in the logical channel or the logical channel group, canceling the triggered reporting of the buffer status includes at least one of:
the first processing unit is used for canceling a triggered DSR; or
the apparatus further includes a first sending unit, used for sending a DSR MAC CE with a remaining time of 0 and a buffer size of 0 to a network device.

In an embodiment, the first processing unit is further used for:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the first processing unit is further used for:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the apparatus; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the apparatus determines to simultaneously send the triggered DSR and the triggered BSR to the network device, the first processing unit is further used for:
containing the DSR MAC CE and a BSR MAC CE in an MAC PDU;
   or,
in case that the apparatus determines not to simultaneously send the triggered DSR and the triggered BSR to the network device, the first processing unit is further used for:
   containing the DSR MAC CE in an MAC PDU, and containing a BSR MAC CE in other uplink resources.

An embodiment of the present application further provides an apparatus for processing information, including:
a second processing unit, used for determining that a terminal cancels triggered reporting of a buffer status in case of detecting that the terminal does not send data on a first uplink resource.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the apparatus further includes a second receiving unit, used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, the apparatus further includes a second receiving unit, used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

An embodiment of the present application further provides a processor readable storage medium storing a computer program, where the computer program causes a processor to perform any of the methods described above.

In the methods and apparatuses for reporting buffer status, the terminal, and the network device provided by the embodiments of the present application, in case that a terminal reports a portion of buffer data, or some or all PDUs or PDU sets in a buffer are discarded, the terminal may report an accurate BSR or DSR, or the terminal may clear or cancel a triggered BSR and its corresponding SR based on the buffer, or the terminal may clear or cancel a triggered DSR and its corresponding SR based on the buffer, or the terminal may update information reported in a DSR MAC CE or BSR MAC CE. By canceling the BSR and/or DSR, as well as canceling the SR corresponding to the BSR and/or canceling the SR corresponding to the DSR, uplink air interface resources may be saved, facilitating accurate resource allocation on a base station side, and improving transmission efficiency.

### BRIEF DESCRIPTION OF THE DRAWINGS

In order to illustrate the solutions in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a structural diagram of a network system applicable to embodiments of the present application according to the related art;
FIG. 2 is a schematic diagram of a relationship between an extended reality (XR) service frame and a packet data unit (PDU) according to the related art;
FIG. 3 is a first schematic flowchart of a method for reporting buffer status according to an embodiment of the present application;
FIG. 4 is a second schematic flowchart of a method for reporting buffer status according to an embodiment of the present application;

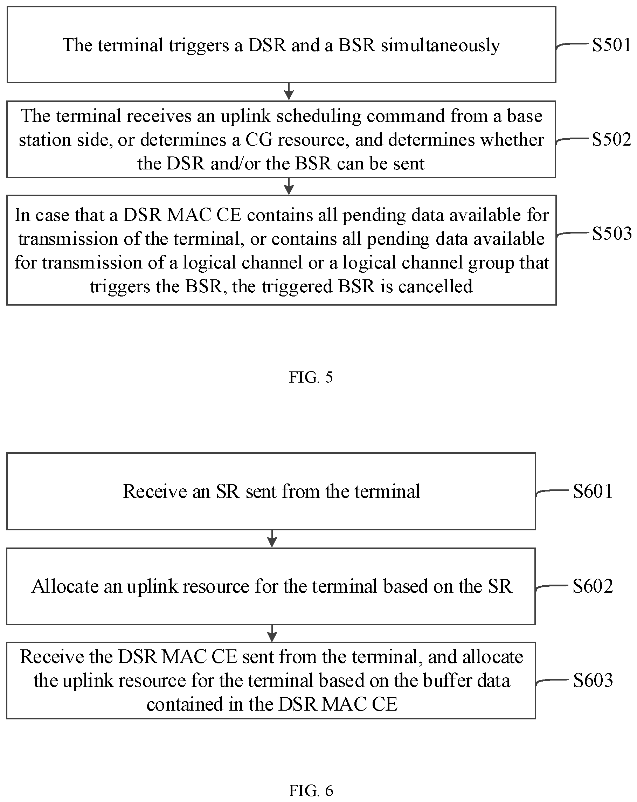

FIG. 5 is a third schematic flowchart of a method for reporting buffer status according to an embodiment of the present application;
FIG. 6 is a fourth schematic flowchart of a method for reporting buffer status according to an embodiment of the present application;

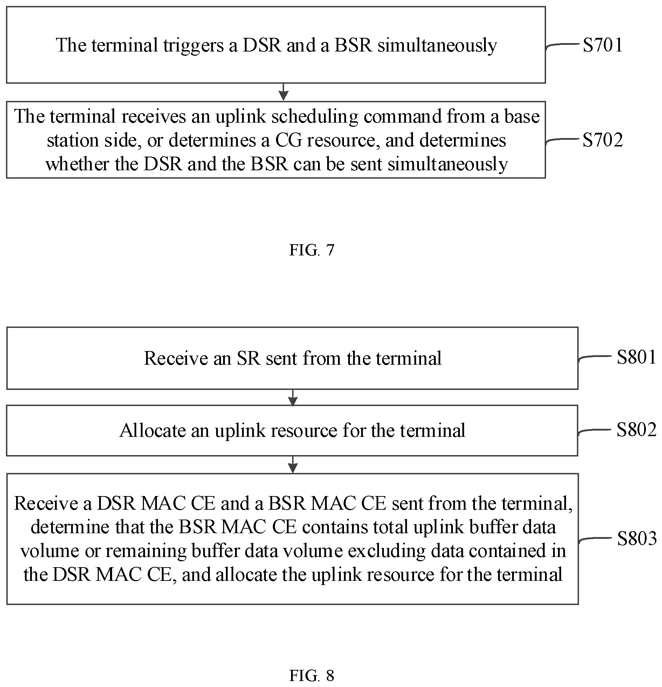

FIG. 7 is a fifth schematic flowchart of a method for reporting buffer status according to an embodiment of the present application;
FIG. 8 is a sixth schematic flowchart of a method for reporting buffer status according to an embodiment of the present application;

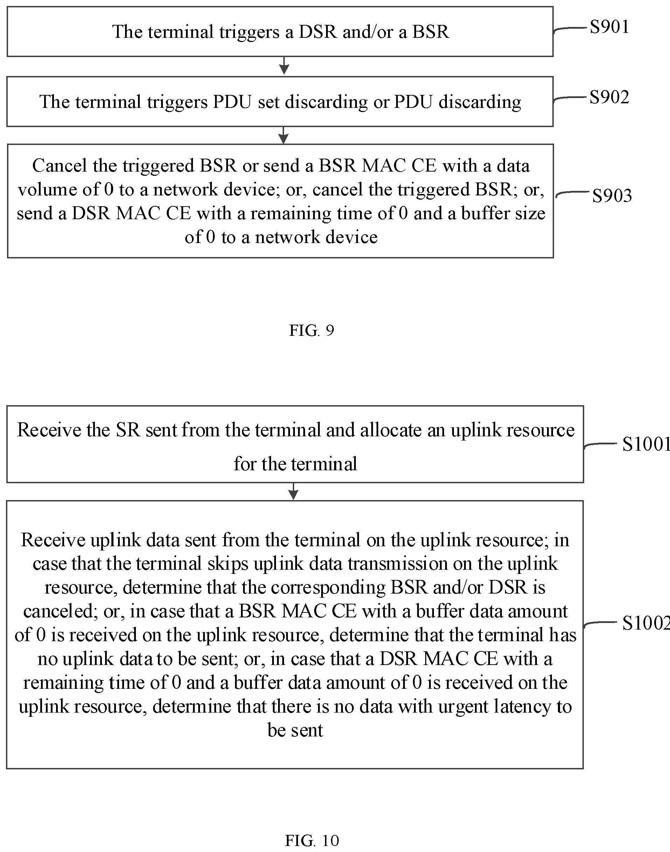

FIG. 9 is a seventh schematic flowchart of a method for reporting buffer status according to an embodiment of the present application;
FIG. 10 is an eighth schematic flowchart of a method for reporting buffer status according to an embodiment of the present application;

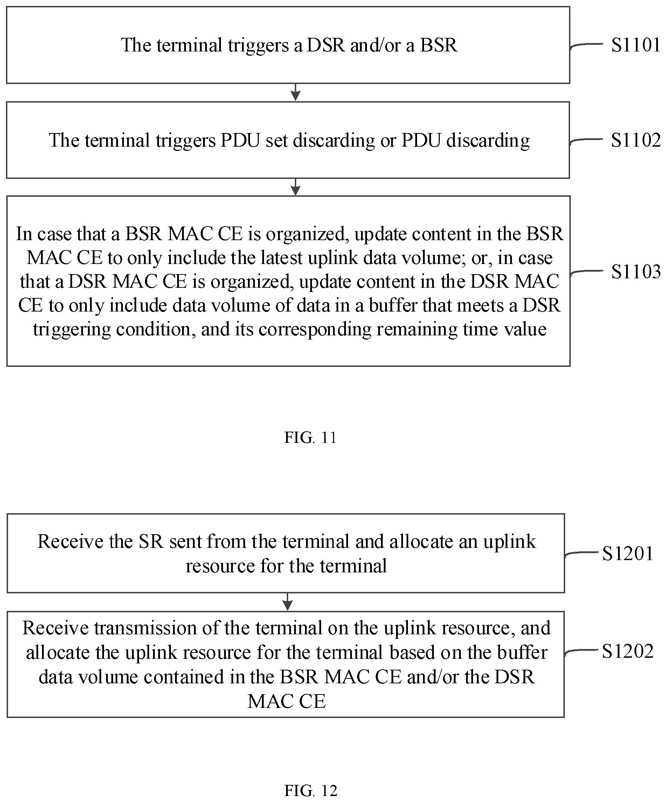

FIG. 11 is a ninth schematic flowchart of a method for reporting buffer status according to an embodiment of the present application;
FIG. 12 is a tenth schematic flowchart of a method for reporting buffer status according to an embodiment of the present application;
FIG. 13 is a structural diagram of a terminal according to an embodiment of the present application;
FIG. 14 is a structural diagram of a network device according to an embodiment of the present application;
FIG. 15 is a first structural diagram of an apparatus for processing information according to an embodiment of the present application; and
FIG. 16 is a second structural diagram of an apparatus for processing information according to an embodiment of the present application.

### DETAILED DESCRIPTION

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The terms "first", "second", etc. in the specification and claims of the present application are used to distinguish similar objects and are not necessarily used to describe a specific order or sequence. It should be understood that such described data can be interchanged where appropriate so that the embodiments described in the present application can also be implemented in orders other than those illustrated or described herein. Furthermore, the terms "include", "comprise", "have", and any variations thereof, are intended to cover non-exclusive inclusion; for example, a procedure, method, system, product, or device that includes a series of steps or units is not necessarily limited to those steps or units explicitly listed, but may include other steps or units not explicitly listed or inherent to such procedures, methods, products, or devices.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship. In the embodiments of the present application, the term "multiple" refers to two or more than two, and other quantifiers are similar.

In the embodiments of the present application, the words "exemplary" or "for example" are used to indicate that something is an example, illustration, or description. Any embodiment or solution described as "exemplary" or "for example" in the embodiments of the present application should not be construed as being more preferred or advantageous than other embodiments or solutions. Rather, the use of the words "exemplary" or "for example" is intended to present the relevant concepts in a specific manner.

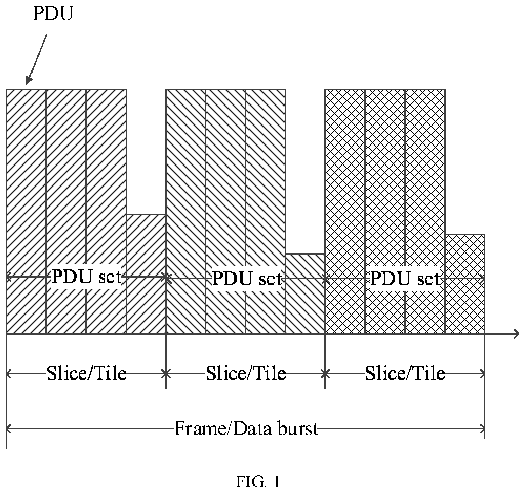

Referring to FIG. 1, FIG. 1 is a structural diagram of a network system applicable to embodiments of the present application according to the related art. As shown in FIG. 1, it includes a terminal 11 and a base station 12. The terminal 11 may be a user equipment (UE), such as a mobile phone, tablet personal computer, laptop computer, personal digital assistant (PDA), mobile internet device (MID), or wearable device. It should be noted that a specific type of the terminal 11 is not limited in the embodiments of the present application. The base station 12 may be a base station (e.g., gNB, 5th generation (5G) new radio (NR), etc.) of a 5G mobile communication system (hereinafter referred to as 5G system) and later versions of communication systems (e.g., 6th generation (6G) communication system), or a base station in other communication systems or a gateway station supporting satellite communication, or referred to as Node B. It should be noted that in the embodiments of the present application, only a 5G base station is used as an example for description, but a specific type of the base station 12 is not limited.

The relevant concepts mentioned in the present application are briefly explained below.

### 1. Basic concepts of extended reality (XR)

An XR service is introduced in a 3rd generation partnership project (3GPP) 5G system, the XR is divided into following categories:
augmented reality (AR): the real world and the virtual world are seamlessly integrated, which is half real and half unreal;
virtual reality (VR): a virtual world is simulated and generated by using devices, which is entirely unreal;
mixed reality (MR): real physical entities and virtual information are contained simultaneously.

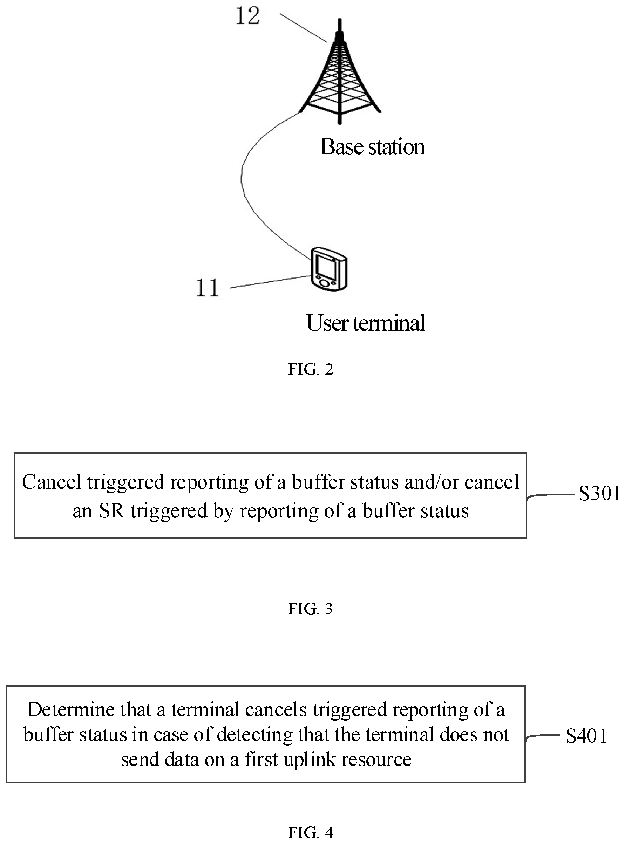

As shown in FIG. 2, XR services are modeled based on data frames. Each data frame corresponds to one XR video frame. A same data frame may be divided into one or more packet data unit (PDU) sets. One PDU set contains multiple PDUs. PDUs within a PDU set are associated and require unified processing. In the present application, a data frame is also equivalent to a data burst.

Some characteristics of an XR service are as follows:
(1) video frame periods are 15/30/60/90/120 frames per second (fps), corresponding to periods of 66.6/33.3/16.66/11.11/8.33 ms;
(2) frame arrival time has unpredictable jitter;
(3) latency requirement is 10 ms or 7-15 ms;
(4) bit rate: 10-200 Mbps;
(5) PDU set quality of service (QoS) parameters include at least:
   (i) PDU set error rate (PSER);
   (ii) PDU set delay budget (PSDB); or
   (iii) PDU-Set integrated handling indication (PSIHI), used to indicate whether an application layer should use all PDUs in the PDU set;
   for uplink XR services, a PDU discarding mechanism and a delay status report (DSR) mechanism are introduced in the 5G NR system.

### 2. Basic concepts of PDU discarding

Since a PDU set has a requirement of integrity, in case that one or more PDUs in a PDU set expire or are discarded, a terminal needs to discard the entire PDU set, that is, discard all other PDUs in the PDU set. Another situation for PDU discarding is that, a base station determines whether the network is congested, and in case that it is determined that there is network congestion, a terminal may be instructed to discard some less important PDU sets.

### 3. Basic concepts of DSR

A terminal may trigger and report an uplink delay status report based on a time threshold configured by a base station. The uplink delay status report is carried through a DSR media access control (MAC) control element (CE), and the DSR MAC CE includes remaining time information and data volume information associated with the remaining time information.

### 4. Basic concepts of reporting of uplink buffer

When a base station receives a buffer status report (BSR) MAC CE reported from a terminal, the base station may allocate an uplink resource of a corresponding size based on the BSR reported from the terminal.

### 5. BSR triggering mechanism

There are three types of BSR: regular BSR, periodic BSR, and padding BSR.

Regular BSR triggering: (1) triggers in case that data with a higher priority than data in a current buffer arrives or data arrives in a previously empty buffer; (2) triggers in case that retxBSR-Timer expires and data arrives in a buffer.

Periodic BSR triggering: triggers periodic BSR in case that periodicBSR-Timer expires.

Padding BSR Triggering: in case that a UE may accommodate more bits (padding) in its uplink (UL) grant besides data to be transmitted when organizing an MAC PDU, a padding BSR may be triggered.

The regular BSR triggers reporting of a scheduling request (SR). After an SR is triggered, the triggered SR is canceled when sending the BSR that triggered the SR, or when an uplink resource may accommodate all uplink buffer data of the terminal.

In case that an uplink resource may accommodate all uplink buffer data of the terminal, or in case that an uplink transmission contains a triggered BSR, the triggered BSR is canceled.

The embodiments of present application are described below with reference to the accompanying drawings. The methods and apparatuses for processing a buffer status report, the terminal, and the network device provided by the embodiments of the present application may be applied to a radio communication system. This radio communication system may be a 5G communication system or a future 6G communication system. Those skilled in the art may understand that the 5G NR system is merely an example and not a limitation.

In the related art, the triggering and sending of BSR are independent operations. After introducing PDU discarding and DSR mechanisms in XR services, problems arise, such as PDU discarding leading to discarding of data on a logical channel that triggered the BSR, making it unnecessary to report a BSR MAC CE; or DSR reporting containing uplink buffer data related to remaining time, a BSR MAC CE may lead to redundant reporting, and a base station not knowing how to allocate uplink scheduling resources. There is no solution to these problems in the related art.

The embodiments of the present application provide methods and apparatuses for reporting buffer status, a terminal, and a network device, facilitating accurate resource allocation on a base station side, saving uplink resources, and improving transmission efficiency.

The methods and apparatuses are based on the same concept. Since the methods and apparatuses solve problems in similar principles, their implementation methods may be mutually referenced, and repeated points are not elaborated.

As shown in FIG. 3, an embodiment of the present application provides a method for reporting buffer status, performed by a terminal, including:
step 301: cancel triggered reporting of a buffer status and/or cancel a scheduling request (SR) triggered by reporting of a buffer status in case that a first condition is met.

The first condition includes at least one of:
a delay status report (DSR) media access control (MAC) control element (CE) containing all pending data available for transmission of the terminal;
a DSR MAC CE containing all pending data available for transmission of a logical channel or a logical channel group that triggers a buffer status report (BSR); or
the terminal discarding a packet data unit (PDU) set or a PDU.

In an embodiment, the DSR MAC CE containing all the buffer data volume of the terminal or the DSR MAC CE containing all the buffer data volume of the logical channel or the logical channel group that triggers the BSR, which may be understood as filling a DSR MAC CE field with all the buffer data volume of the terminal or the buffer data volume of the logical channel or the logical channel group that triggers the BSR when organizing the MAC CE.

In an embodiment, canceling the triggered reporting of the buffer status includes at least one of:
canceling a BSR for reporting the buffer status; or
canceling a DSR for reporting the buffer status.

In an embodiment, canceling the triggered reporting of the buffer status includes canceling a triggered BSR and/or cancelling a triggered DSR.

In an embodiment, the terminal discarding the PDU set or the PDU includes at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

In an embodiment, in case that the terminal discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

In an embodiment, in case that the terminal discarding all data in the buffer, canceling the triggered reporting of the buffer status includes at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

In an embodiment, in case that the terminal discarding the data that triggered the BSR in the logical channel or the logical channel group, canceling the triggered reporting of the buffer status includes:
canceling a triggered BSR.

In an embodiment, in case that the terminal discarding the data that triggered the DSR in the logical channel or the logical channel group, canceling the triggered reporting of the buffer status includes at least one of:
canceling a triggered DSR; or
sending a DSR MAC CE with a remaining time of 0 and a buffer size of 0 to a network device.

In an embodiment, before canceling the triggered reporting of the buffer status and/or canceling the SR triggered based on the reporting of the buffer status, the method further includes:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the method further includes:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the terminal; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the terminal determines to simultaneously send the triggered DSR and the triggered BSR to the network device, the method further includes:
containing the DSR MAC CE and a BSR MAC CE in an MAC PDU;
   or,
in case that the terminal determines not to simultaneously send the triggered DSR and the triggered BSR to the network device, the method further includes:
   containing the DSR MAC CE in an MAC PDU, and containing a BSR MAC CE in other uplink resources.

As shown in FIG. 4, an embodiment of the present application provides a method for reporting buffer status, performed by a network device, including:
determine that a terminal cancels triggered reporting of a buffer status in case of detecting that the terminal does not send data on a first uplink resource.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the method further includes at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, before determining that the terminal cancels the triggered reporting of the buffer status, the method further includes at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

Taking a network device as a base station as an example, specific application examples of the embodiments of the present application are described below.

### Application scenario 1: DSR causes BSR cancellation

Steps performed on a terminal side include the following.

Step S501: the terminal triggers a DSR and a BSR simultaneously.

In an embodiment, an SR corresponding to a triggered BSR is triggered based on the triggered BSR and/or an SR corresponding to a triggered DSR is triggered based on the triggered DSR.

Step S502: the terminal receives an uplink scheduling command from a base station side, or determines a configured grant (CG) resource, and determines whether the DSR and/or the BSR can be sent.

Step S503: in case that a DSR MAC CE contains all pending data available for transmission of the terminal, or contains all pending data available for transmission of a logical channel or a logical channel group that triggers the BSR, the triggered BSR is cancelled; in an embodiment, the SR corresponding to the triggered BSR is cancelled.

Correspondingly, steps performed on a base station side include the following.

Step S601: receive an SR sent from the terminal.

In an embodiment, the base station may determine that the SR is the SR corresponding to the DSR or the SR corresponding to the BSR.

Step S602: allocate an uplink resource for the terminal based on the SR.

In an embodiment, in case that it is determined that the terminal has a pre-configured resource, a dynamic scheduling resource may not be sent.

Step S603: receive the DSR MAC CE sent from the terminal, and allocate the uplink resource for the terminal based on the buffer data contained in the DSR MAC CE.

Application scenario 2: both DSR and BSR are reported

Steps performed on a terminal side include the following.

Step S701: the terminal triggers a DSR and a BSR simultaneously.

In an embodiment, an SR corresponding to a triggered BSR is triggered based on the triggered BSR and/or an SR corresponding to a triggered DSR is triggered based on the triggered DSR.

Step S702: the terminal receives an uplink scheduling command from a base station side, or determines a CG resource, and determines whether the DSR and the BSR can be sent simultaneously.

In case that the DSR and the BSR can be sent simultaneously, the MAC PDU contains one DSR MAC CE and one BSR MAC CE; in case that the DSR and the BSR cannot be sent simultaneously, the MAC PDU only contains the DSR MAC CE, and subsequent uplink resources contain the BSR MAC CE. The BSR MAC CE contains total buffer data volume of the terminal, or, contains remaining data volume excluding data contained in the DSR.

Correspondingly, steps performed on a base station side include the following.

Step S801: receive an SR sent from the terminal.

In an embodiment, the base station may determine that the SR is the SR corresponding to the DSR or the SR corresponding to the BSR.

Step S802: allocate an uplink resource for the terminal.

In an embodiment, in case that it is determined that the terminal has a pre-configured resource, a dynamic scheduling resource may not be sent.

In an embodiment, in case that it is determined that both the DSR and the BSR need to be sent, an uplink resource sufficient to accommodate these two MAC CEs is allocated for the terminal.

Step S803: receive a DSR MAC CE and a BSR MAC CE sent from the terminal, determine that the BSR MAC CE contains total uplink buffer data volume or remaining buffer data volume excluding data contained in the DSR MAC CE, and allocate the uplink resource for the terminal.

Application scenario 3: impact of PDU discarding on reporting of buffer status

Steps performed on a terminal side include the following.

Step S901: the terminal triggers a DSR and/or a BSR.

In an embodiment, an SR corresponding to a triggered BSR is triggered based on the triggered BSR and/or an SR corresponding to a triggered DSR is triggered based on the triggered DSR.

Step S902: the terminal triggers PDU set discarding or PDU discarding, including:
case 1: discarding all data in a buffer of the terminal, or
case 2: discarding all data in a logical channel or a logical channel group that triggers the BSR, or
case 3: discarding all buffer data in a logical channel or a logical channel group that triggers the DSR.

Step S903: for case 1 above, cancel the triggered BSR, or send a BSR MAC CE with a data volume of 0 to a network device; for case 2 above, cancel the triggered BSR; and for case 3 above, cancel the triggered DSR, or send a DSR MAC CE with a remaining time of 0 and a buffer size of 0 to a network device.

Correspondingly, steps performed on a base station side include the following.

Step S1001: receive the SR sent from the terminal and allocate an uplink resource for the terminal.

Step S1002: receive uplink data sent from the terminal on the uplink resource; in case that the terminal skips uplink data transmission on the uplink resource, determine that the corresponding BSR and/or DSR is canceled; or, in case that a BSR MAC CE with a buffer data amount of 0 is received on the uplink resource, determine that the terminal has no uplink data to be sent; or, in case that a DSR MAC CE with a remaining time of 0 and a buffer data amount of 0 is received on the uplink resource, determine that there is no data with urgent latency to be sent.

Application scenario 4: impact of PDU discarding on reporting of buffer status

Steps performed on a terminal side include the following.

Step S1101: the terminal triggers a DSR and/or a BSR.

In an embodiment, an SR corresponding to a triggered BSR is triggered based on the triggered BSR and/or an SR corresponding to a triggered DSR is triggered based on the triggered DSR.

Step S1102: the terminal triggers PDU set discarding or PDU discarding, including: discarding a portion of data in a buffer of the terminal.

Step S1103: in case that a BSR MAC CE is organized, update content in the BSR MAC CE to only include the latest uplink data volume; or, in case that a DSR MAC CE is organized, update content in the DSR MAC CE to only include data volume of data in a buffer that meets a DSR triggering condition, and its corresponding remaining time value.

Correspondingly, steps performed on a base station side include the following.

Step S1201: receive the SR sent from the terminal and allocate an uplink resource for the terminal.

Step S1202: receive transmission of the terminal on the uplink resource, and allocate the uplink resource for the terminal based on the buffer data volume contained in the BSR MAC CE and/or the DSR MAC CE.

In the methods provided by the embodiments of the present application, in case that a terminal reports a portion of buffer data, or some or all PDUs or PDU sets in a buffer are discarded, the terminal may report an accurate BSR or DSR, or the terminal may clear or cancel a triggered BSR and its corresponding SR based on the buffer, or the terminal may clear or cancel a triggered DSR and its corresponding SR based on the buffer, or the terminal may update information reported in a DSR MAC CE or BSR MAC CE. By canceling the BSR and/or DSR, as well as canceling the SR corresponding to the BSR and/or canceling the SR corresponding to the DSR, uplink air interface resources may be saved, facilitating accurate resource allocation on a base station side, and improving transmission efficiency.

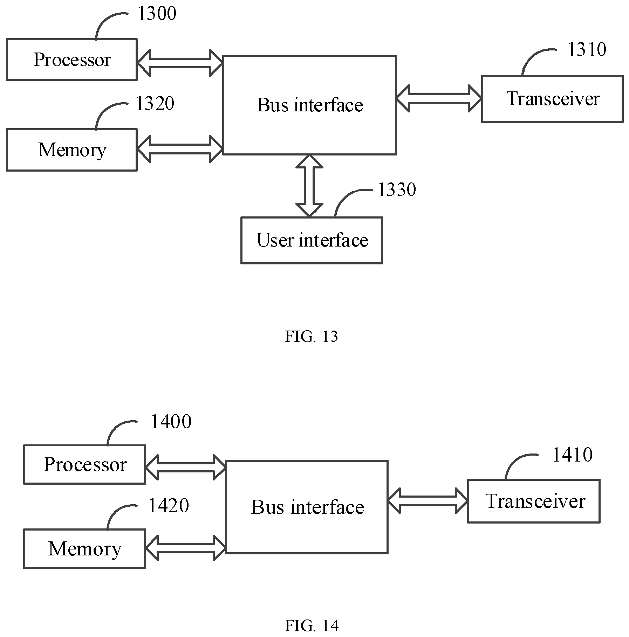

As shown in FIG. 13, an embodiment of the present application further provides a terminal, the terminal is a first terminal, including a processor 1300, a transceiver 1310, a memory 1320, and a program stored in the memory 1320 and executable on the processor 1300, where the transceiver 1310 is connected to the processor 1300 and the memory 1320 through a bus interface, and the processor 1300 is used for reading the program in the memory and performing following procedures:
canceling triggered reporting of a buffer status and/or canceling a scheduling request (SR) triggered by reporting of a buffer status in case that a first condition is met,
where the first condition includes at least one of:
   a delay status report (DSR) media access control (MAC) control element (CE) containing all pending data available for transmission of the terminal;
   a DSR MAC CE containing all pending data available for transmission of a logical channel or a logical channel group that triggers a buffer status report (BSR); or
   the terminal discarding a packet data unit (PDU) set or a PDU.

The transceiver 1310 is used for receiving and sending data under control of the processor 1300.

In FIG. 13, a bus architecture may include any number of interconnected buses and bridges, which are linked together through various circuits of one or more processors represented by the processor 1300 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1310 may include multiple elements, i.e., including a transmitter and a receiver, units for providing communication with various other devices over transmission media including wireless channels, wired channels, fiber optic cables, and the like. For different user equipment, a user interface 1330 may be an interface capable of externally or internally connecting the required equipment, and the connected equipment includes, but not limited to, a keypad, a display, a speaker, a microphone, a joystick, and the like.

The processor 1300 is responsible for managing the bus architecture and general processing, and the memory 1320 may store data used by the processor 1300 when performing operations.

The processor 1300 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application in accordance with the obtained executable instructions. The processor and memory may also be physically arranged separately.

In an embodiment, canceling the triggered reporting of the buffer status includes at least one of:
canceling a BSR for reporting the buffer status; or
canceling a DSR for reporting the buffer status.

In an embodiment, the terminal discarding the PDU set or the PDU includes at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

In an embodiment, in case that the terminal discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

In an embodiment, in case that the terminal discarding all data in the buffer, canceling the triggered reporting of the buffer status includes at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

In an embodiment, in case that the terminal discarding the data that triggered the BSR in the logical channel or the logical channel group, canceling the triggered reporting of the buffer status includes:
canceling a triggered BSR.

In an embodiment, in case that the terminal discarding the data that triggered the DSR in the logical channel or the logical channel group, canceling the triggered reporting of the buffer status includes at least one of:
canceling a triggered DSR; or
sending a DSR MAC CE with a remaining time of 0 and a buffer size of 0 to a network device.

In an embodiment, before canceling the triggered reporting of the buffer status and/or canceling the SR triggered based on the reporting of the buffer status, the processor is further used for:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the processor 1300 is further used for:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the terminal; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the terminal determines to simultaneously send the triggered DSR and the triggered BSR to the network device, the processor 1300 is further used for:
containing the DSR MAC CE and a BSR MAC CE in an MAC PDU;
   or,
in case that the terminal determines not to simultaneously send the triggered DSR and the triggered BSR to the network device, the processor 1300 is further used for:
   containing the DSR MAC CE in an MAC PDU, and containing a BSR MAC CE in other uplink resources.

It should be noted here that the above terminal provided by the embodiments of the present application may implement all the method steps implemented by the above method embodiments, and may achieve the same effect. The same parts and beneficial effects as the same method embodiments are not repeated in the present application.

As shown in FIG. 14, an embodiment of the present application further provides a network device, including a processor 1400, a transceiver 1410, a memory 1420, and a program stored in the memory 1420 and executable on the processor 1400, where the transceiver 1410 is connected to the processor 1400 and the memory 1420 through a bus interface, and the processor 1400 is used for reading the program in the memory and performing following procedures:
determining that a terminal cancels triggered reporting of a buffer status in case of detecting that the terminal does not send data on a first uplink resource.

The transceiver 1410 is used for receiving and sending data under control of the processor 1400.

In FIG. 14, a bus architecture may include any number of interconnected buses and bridges, which are linked together through various circuits of one or more processors represented by the processor 1400 and one or more memories represented by the memory 1420. The bus architecture may also link together various other circuits, such as peripherals, voltage regulators, and power management circuits, etc., which are well known in the art, and therefore are not further described in the present application. The bus interface provides an interface. The transceiver 1410 may include multiple elements, i.e., including a transmitter and a receiver, units for providing communication with various other devices over transmission media including wireless channels, wired channels, fiber optic cables, and the like.

The processor 1400 is responsible for managing the bus architecture and general processing, and the memory 1420 may store data used by the processor 1400 when performing operations.

In an embodiment, the processor 1400 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application in accordance with the obtained executable instructions. The processor and memory may also be physically arranged separately.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the processor 1400 is further used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, before determining that the terminal cancels the triggered reporting of the buffer status, the processor 1400 is further used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

It should be noted here that the above network device provided by the embodiments of the present application may implement all the method steps implemented by the above method embodiments, and may achieve the same effect. The same parts and beneficial effects as the same method embodiments are not repeated in the present application.

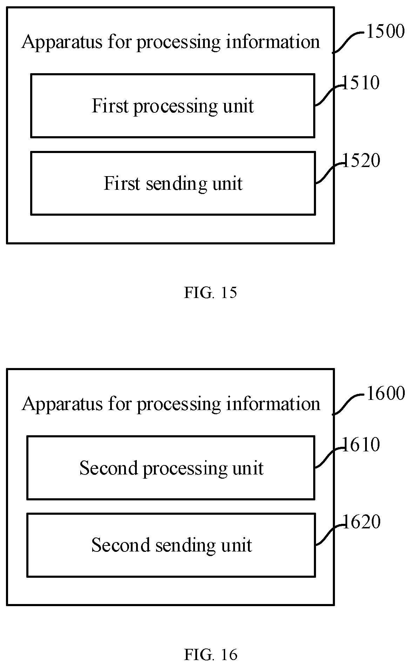

As shown in FIG. 15, an embodiment of the present application provides an apparatus 1500 for processing information, for use in a terminal, including a first processing unit 1510 and a first sending unit 1520.

The first processing unit 1510 is used for canceling triggered reporting of a buffer status and/or canceling a scheduling request (SR) triggered by reporting of a buffer status in case that a first condition is met,
where the first condition includes at least one of:
a delay status report (DSR) media access control (MAC) control element (CE) containing all pending data available for transmission of the apparatus 1500;
a DSR MAC CE containing all pending data available for transmission of a logical channel or a logical channel group that triggers a buffer status report (BSR); or
the apparatus 1500 discarding a packet data unit (PDU) set or a PDU.

In an embodiment, canceling the triggered reporting of the buffer status includes at least one of:
canceling a BSR for reporting the buffer status; or
canceling a DSR for reporting the buffer status.

In an embodiment, the apparatus 1500 discarding the PDU set or the PDU includes at least one of:
the first processing unit 1510 discarding a portion of data in a buffer;
the first processing unit 1510 discarding all data in a buffer;
the first processing unit 1510 discarding data that triggered a BSR in a logical channel or a logical channel group; or
the first processing unit 1510 discarding data that triggered a DSR in a logical channel or a logical channel group.

In an embodiment, in case that the apparatus 1500 discarding the portion of the data in the buffer, canceling the triggered reporting of the buffer status includes at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the apparatus 1500 discards the portion of the data in the buffer;
in case that a DSR MAC CE is organized, updating the DSR MAC CE to contain buffer data volume after the apparatus 1500 discards the portion of the data in the buffer; or
in case that a DSR MAC CE is organized, updating the DSR MAC CE to contain data volume of data in a buffer of the apparatus 1500 that meets a DSR triggering condition, and remaining time corresponding to the data volume.

In an embodiment, in case that the apparatus 1500 discarding all data in the buffer, canceling the triggered reporting of the buffer status includes at least one of:
the first sending unit 1520 is used for sending a BSR MAC CE with a buffer size of 0 to a network device;
the first processing unit 1510 is used for canceling a triggered BSR;
the first sending unit 1520 is used for sending a DSR MAC CE with a remaining time of 0 and a buffer size of 0 to a network device; or
the first processing unit 1510 is used for canceling a triggered DSR.

In an embodiment, in case that the apparatus 1500 discarding the data that triggered the BSR in the logical channel or the logical channel group, canceling the triggered reporting of the buffer status includes:
the first processing unit 1510 is used for canceling a triggered BSR.

In an embodiment, in case that the apparatus 1500 discarding the data that triggered the DSR in the logical channel or the logical channel group, canceling the triggered reporting of the buffer status includes at least one of:
the first processing unit 1510 is used for canceling a triggered DSR; or
the first sending unit 1520 is used for sending a DSR MAC CE with a remaining time of 0 and a buffer size of 0 to a network device.

In an embodiment, the first processing unit 1510 is further used for:
triggering a DSR and/or a BSR; and
determining at least one of following based on an uplink scheduling command received from a network device or a determined configured grant (CG) resource:
   whether to send a triggered DSR to the network device; or
   whether to send a triggered DSR and a triggered BSR to the network device simultaneously.

In an embodiment, the first processing unit 1510 is further used for:
triggering an SR corresponding to the triggered BSR based on the triggered BSR and/or triggering an SR corresponding to the triggered DSR based on the triggered DSR.

In an embodiment, in case of simultaneously triggering the DSR and the BSR, a type of data volume contained in a BSR MAC CE is any of:
total buffer data volume of the apparatus; or
remaining data volume other than data contained in the DSR;
where the type of data volume contained in the BSR MAC CE is determined by a protocol or configured by the network device.

In an embodiment, in case of simultaneously triggering the DSR and the BSR, an uplink transmission priority of the DSR MAC CE is higher than an uplink transmission priority of a BSR MAC CE.

In an embodiment, in case that the apparatus 1500 determines to simultaneously send the triggered DSR and the triggered BSR to the network device, the first processing unit 1510 is further used for:
containing the DSR MAC CE and a BSR MAC CE in an MAC PDU;
   or,
in case that the apparatus 1500 determines not to simultaneously send the triggered DSR and the triggered BSR to the network device, the first processing unit 1510 is further used for:
   containing the DSR MAC CE in an MAC PDU, and containing a BSR MAC CE in other uplink resources.

It should be noted that the apparatus embodiments correspond one-to-one with the above method embodiments. All implementation manners in the above method embodiments are applicable to the apparatus embodiments and can achieve the same effect.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

As shown in FIG. 16, an embodiment of the present application provides an apparatus 1600 for processing information, including a second processing unit 1610 and a second receiving unit 1620.

The second processing unit 1610 is used for determining that a terminal cancels triggered reporting of a buffer status in case of detecting that the terminal does not send data on a first uplink resource.

In an embodiment, canceling the triggered reporting of the buffer status includes at least one of:
canceling reporting of a buffer status report (BSR) for the buffer status; or
canceling reporting of a delay status report (DSR) for the buffer status.

In an embodiment, the second receiving unit 1620 is used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

In an embodiment, the second receiving unit 1620 is further used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

It should be noted that the apparatus embodiments correspond one-to-one with the above method embodiments. All implementation manners in the above method embodiments are applicable to the apparatus embodiments and can achieve the same effect.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a processor readable storage medium storing a computer program, where the computer program causes a processor to perform any of the methods described above. The processor readable storage medium may be any available medium or data storage device that may be accessed by the processor, including but not limited to, a magnetic storage (e.g., a floppy disk, a hard disk, a magnetic tape, a magnetooptical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for reporting buffer status, performed by a terminal, the method comprising:
canceling triggered reporting of a buffer status and/or canceling a scheduling request (SR) triggered by reporting of a buffer status in case that a first condition is met,
wherein the first condition comprises at least one of:
a delay status report (DSR) media access control (MAC) control element (CE) containing all pending data available for transmission of the terminal;
a DSR MAC CE containing all pending data available for transmission of a logical channel or a logical channel group that triggers a buffer status report (BSR); or
the terminal discarding a packet data unit (PDU) set or a PDU.

2. The method of claim 1, wherein canceling the triggered reporting of the buffer status comprises at least one of:
canceling a BSR for reporting the buffer status; or
canceling a DSR for reporting the buffer status.

3. The method of claim 1 or 2, wherein the terminal discarding the PDU set or the PDU comprises at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

4. The method of claim 3, wherein in case that the terminal discarding the portion of the data in the buffer, canceling the triggered reporting of the buffer status comprises at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

5. The method of claim 3, wherein in case that the terminal discarding all data in the buffer, canceling the triggered reporting of the buffer status comprises at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

6. The method of claim 3, wherein in case that the terminal discarding the data that triggered the BSR in the logical channel or the logical channel group, canceling the triggered reporting of the buffer status comprises:
canceling a triggered BSR.

7. The method of claim 3, wherein in case that the terminal discarding the data that triggered the DSR, canceling the triggered reporting of the buffer status comprises at least one of:
canceling a triggered DSR; or
sending a DSR MAC CE with a remaining time of 0 and a buffer size of 0 to a network device.

8. The method of any of claims 1 to 7, wherein before canceling the triggered reporting of the buffer status and/or canceling the SR triggered by the reporting of the buffer status, the method further comprises:
triggering a DSR and/or a BSR; and
determining at least one of following based on an uplink scheduling command received from a network device or a determined configured grant (CG) resource:
whether to send a triggered DSR to the network device; or
whether to send a triggered DSR and a triggered BSR to the network device simultaneously.

9. The method of claim 8, further comprising:
triggering an SR corresponding to the triggered BSR based on the triggered BSR and/or triggering an SR corresponding to the triggered DSR based on the triggered DSR.

10. The method of claim 8 or 9, wherein in case of simultaneously triggering the DSR and the BSR, a type of data volume contained in a BSR MAC CE is any of:
total buffer data volume of the terminal; or
remaining data volume other than data contained in the DSR;
wherein the type of data volume contained in the BSR MAC CE is determined by a protocol or configured by the network device.

11. The method of claim 8 or 9, wherein in case of simultaneously triggering the DSR and the BSR, an uplink transmission priority of the DSR MAC CE is higher than an uplink transmission priority of a BSR MAC CE.

12. The method of claim 8 or 9, wherein in case that the terminal determines to simultaneously send the triggered DSR and the triggered BSR to the network device, the method further comprises:
containing the DSR MAC CE and a BSR MAC CE in an MAC PDU;
or,
in case that the terminal determines not to simultaneously send the triggered DSR and the triggered BSR to the network device, the method further comprises:
containing the DSR MAC CE in an MAC PDU, and containing a BSR MAC CE in other uplink resources.

13. A method for reporting buffer status, performed by a network device, the method comprising:
determining that a terminal cancels triggered reporting of a buffer status in case of detecting that the terminal does not send data on a first uplink resource.

14. The method of claim 13, wherein canceling the triggered reporting of the buffer status comprises at least one of:
canceling a buffer status report (BSR) for reporting the buffer status; or
canceling a delay status report (DSR) for reporting the buffer status.

15. The method of claim 13 or 14, further comprising at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

16. The method of any of claims 13 to 15, wherein before determining that the terminal cancels the triggered reporting of the buffer status, the method further comprises at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

17. A terminal, comprising a memory, a transceiver and a processor,
wherein the memory is used for storing a computer program, the transceiver is used for receiving and sending data under control of the processor, and the processor is used for reading the computer program in the memory and performing following operations:
canceling triggered reporting of a buffer status and/or canceling a scheduling request (SR) triggered by reporting of a buffer status in case that a first condition is met,
wherein the first condition comprises at least one of:
a delay status report (DSR) media access control (MAC) control element (CE) containing all pending data available for transmission of the terminal;
a DSR MAC CE containing all pending data available for transmission of a logical channel or a logical channel group that triggers a buffer status report (BSR); or
the terminal discarding a packet data unit (PDU) set or a PDU.

18. The terminal of claim 17, wherein canceling the triggered reporting of the buffer status comprises at least one of:
canceling a BSR for reporting the buffer status; or
canceling a DSR for reporting the buffer status.

19. The terminal of claim 17 or 18, wherein the terminal discarding the PDU set or the PDU comprises at least one of:
the terminal discarding a portion of data in a buffer;
the terminal discarding all data in a buffer;
the terminal discarding data that triggered a BSR in a logical channel or a logical channel group; or
the terminal discarding data that triggered a DSR in a logical channel or a logical channel group.

20. The terminal of claim 19, wherein in case that the terminal discarding the portion of the data in the buffer, canceling the triggered reporting of the buffer status comprises at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the terminal discards the portion of the data in the buffer;
in case that a DSR MAC CE is organized, updating the DSR MAC CE to contain buffer data volume after the terminal discards the portion of the data in the buffer; or
in case that a DSR MAC CE is organized, updating the DSR MAC CE to contain data volume of data in a buffer of the terminal that meets a DSR triggering condition, and remaining time corresponding to the data volume.

21. The terminal of claim 19, wherein in case that the terminal discarding all data in the buffer, canceling the triggered reporting of the buffer status comprises at least one of:
sending a BSR MAC CE with a buffer size of 0 to a network device;
canceling a triggered BSR;
sending a DSR MAC CE with a remaining time of 0 and a buffer size of 0 to a network device; or
canceling a triggered DSR.

22. The terminal of claim 19, wherein in case that the terminal discarding the data that triggered the BSR in the logical channel or the logical channel group, canceling the triggered reporting of the buffer status comprises:
canceling a triggered BSR.

23. The terminal of claim 19, wherein in case that the terminal discarding the data that triggered the DSR in the logical channel or the logical channel group, canceling the triggered reporting of the buffer status comprises at least one of:
canceling a triggered DSR; or
sending a DSR MAC CE with a remaining time of 0 and a buffer size of 0 to a network device.

24. The terminal of claim 19, wherein before canceling the triggered reporting of the buffer status and/or canceling the SR triggered based on the reporting of the buffer status, the processor is further used for:
triggering a DSR and/or a BSR; and
determining at least one of following based on an uplink scheduling command received from a network device or a determined configured grant (CG) resource:
whether to send a triggered DSR to the network device; or
whether to send a triggered DSR and a triggered BSR to the network device simultaneously.

25. The terminal of claim 24, wherein the processor is further used for:
triggering an SR corresponding to the triggered BSR based on the triggered BSR and/or triggering an SR corresponding to the triggered DSR based on the triggered DSR.

26. The terminal of claim 24 or 25, wherein in case of simultaneously triggering the DSR and the BSR, a type of data volume contained in a BSR MAC CE is any of:
total buffer data volume of the terminal; or
remaining data volume other than data contained in the DSR;
wherein the type of data volume contained in the BSR MAC CE is determined by a protocol or configured by the network device.

27. The terminal of claim 24 or 25, wherein in case of simultaneously triggering the DSR and the BSR, an uplink transmission priority of the DSR MAC CE is higher than an uplink transmission priority of a BSR MAC CE.

28. The terminal of claim 24 or 25, wherein in case that the terminal determines to simultaneously send the triggered DSR and the triggered BSR to the network device, the processor is further used for:
containing the DSR MAC CE and a BSR MAC CE in an MAC PDU;
or,
in case that the terminal determines not to simultaneously send the triggered DSR and the triggered BSR to the network device, the processor is further used for:
containing the DSR MAC CE in an MAC PDU, and containing a BSR MAC CE in other uplink resources.

29. A network device, comprising a memory, a transceiver and a processor,
wherein the memory is used for storing a computer program, the transceiver is used for receiving and sending data under control of the processor, and the processor is used for reading the computer program in the memory and performing following operations:
determining that a terminal cancels triggered reporting of a buffer status in case of detecting that the terminal does not send data on a first uplink resource.

30. The network device of claim 29, wherein canceling the triggered reporting of the buffer status comprises at least one of:
canceling reporting of a buffer status report (BSR) for the buffer status; or
canceling reporting of a delay status report (DSR) for the buffer status.

31. The network device of claim 29 or 30, wherein the processor is further used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

32. The network device of any of claims 29 to 31, wherein before determining that the terminal cancels the triggered reporting of the buffer status, the processor is further used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

33. An apparatus for processing information, the apparatus comprising:
a first processing unit, used for canceling triggered reporting of a buffer status and/or canceling a scheduling request (SR) triggered by reporting of a buffer status in case that a first condition is met,
wherein the first condition comprises at least one of:
a delay status report (DSR) media access control (MAC) control element (CE) containing all pending data available for transmission of the apparatus;
a DSR MAC CE containing all pending data available for transmission of a logical channel or a logical channel group that triggers a buffer status report (BSR); or
the apparatus discarding a packet data unit (PDU) set or a PDU.

34. The apparatus of claim 33, wherein canceling the triggered reporting of the buffer status comprises at least one of:
canceling a BSR for reporting the buffer status; or
canceling a DSR for reporting the buffer status.

35. The apparatus of claim 33 or 34, wherein the apparatus discarding the PDU set or the PDU comprises at least one of:
the first processing unit discarding a portion of data in a buffer;
the first processing unit discarding all data in a buffer;
the first processing unit discarding data that triggered a BSR in a logical channel or a logical channel group; or
the first processing unit discarding data that triggered a DSR in a logical channel or a logical channel group.

36. The apparatus of claim 35, wherein in case that the apparatus discarding the portion of the data in the buffer, canceling the triggered reporting of the buffer status comprises at least one of:
in case that all data that triggered a BSR in a logical channel or a logical channel group is discarded, cancelling a triggered BSR and/or an SR triggered based on the triggered BSR;
in case that all data that triggered a DSR in a logical channel or a logical channel group is discarded, cancelling a triggered DSR and/or an SR triggered based on the triggered DSR;
in case that a BSR MAC CE is organized, updating the BSR MAC CE to contain buffer data volume after the apparatus discards the portion of the data in the buffer;
in case that a DSR MAC CE is organized, updating the DSR MAC CE to contain buffer data volume after the apparatus discards the portion of the data in the buffer; or
in case that a DSR MAC CE is organized, updating the DSR MAC CE to contain data volume of data in a buffer of the apparatus that meets a DSR triggering condition, and remaining time corresponding to the data volume.

37. The apparatus of claim 35, wherein in case that the apparatus discarding all data in the buffer, canceling the triggered reporting of the buffer status comprises at least one of:
the apparatus further comprises a first sending unit, used for sending a BSR MAC CE with a buffer size of 0 to a network device;
the first processing unit is used for canceling a triggered BSR;
the apparatus further comprises a first sending unit, used for sending a DSR MAC CE with a remaining time of 0 and a buffer size of 0 to a network device; or
the first processing unit is used for canceling a triggered DSR.

38. The apparatus of claim 35, wherein in case that the apparatus discarding the data that triggered the BSR in the logical channel or the logical channel group, canceling the triggered reporting of the buffer status comprises:
the first processing unit is used for canceling a triggered BSR.

39. The apparatus of claim 35, wherein in case that the apparatus discarding the data that triggered the DSR in the logical channel or the logical channel group, canceling the triggered reporting of the buffer status comprises at least one of:
the first processing unit is used for canceling a triggered DSR; or
the apparatus further comprises a first sending unit, used for sending a DSR MAC CE with a remaining time of 0 and a buffer size of 0 to a network device.

40. The apparatus of any of claims 33 to 39, wherein the first processing unit is further used for:
triggering a DSR and/or a BSR; and
determining at least one of following based on an uplink scheduling command received from a network device or a determined configured grant (CG) resource:
whether to send a triggered DSR to the network device; or
whether to send a triggered DSR and a triggered BSR to the network device simultaneously.

41. The apparatus of claim 40, wherein the first processing unit is further used for:
triggering an SR corresponding to the triggered BSR based on the triggered BSR and/or triggering an SR corresponding to the triggered DSR based on the triggered DSR.

42. The apparatus of claim 40 or 41, wherein in case of simultaneously triggering the DSR and the BSR, a type of data volume contained in a BSR MAC CE is any of:
total buffer data volume of the apparatus; or
remaining data volume other than data contained in the DSR;
wherein the type of data volume contained in the BSR MAC CE is determined by a protocol or configured by the network device.

43. The apparatus of claim 40 or 41, wherein in case of simultaneously triggering the DSR and the BSR, an uplink transmission priority of the DSR MAC CE is higher than an uplink transmission priority of a BSR MAC CE.

44. The apparatus of claim 40 or 41, wherein in case that the apparatus determines to simultaneously send the triggered DSR and the triggered BSR to the network device, the first processing unit is further used for:
containing the DSR MAC CE and a BSR MAC CE in an MAC PDU;
or,
in case that the apparatus determines not to simultaneously send the triggered DSR and the triggered BSR to the network device, the first processing unit is further used for:
containing the DSR MAC CE in an MAC PDU, and containing a BSR MAC CE in other uplink resources.

45. An apparatus for processing information, the apparatus comprising:
a second processing unit, used for determining that a terminal cancels triggered reporting of a buffer status in case of detecting that the terminal does not send data on a first uplink resource.

46. The apparatus of claim 45, wherein canceling the triggered reporting of the buffer status comprises at least one of:
canceling reporting of a buffer status report (BSR) for the buffer status; or
canceling reporting of a delay status report (DSR) for the buffer status.

47. The apparatus of claim 45 or 46, further comprising a second receiving unit, used for performing at least one of:
receiving a buffer status report (BSR) media access control (MAC) control element (CE) with a buffer size of 0 sent from the terminal; or
receiving a delay status report (DSR) media access control (MAC) control element (CE) with a remaining time of 0 and a buffer size of 0 sent from the terminal.

48. The apparatus of any of claims 45 to 47, further comprising a second receiving unit, used for performing at least one of:
receiving a triggered delay status report (DSR) and/or a triggered buffer status report (BSR) sent from the terminal; or
receiving a scheduling request (SR) corresponding to a triggered delay status report (DSR) and/or a scheduling request (SR) corresponding to a triggered buffer status report (BSR) sent from the terminal.

49. A processor readable storage medium storing a computer program, wherein the computer program causes a processor to perform the method of any of claims 1 to 12, or perform the method of any of claims 13 to 16.
